# EUROPEAN PATENT APPLICATION

(11) **EP 0 744 454 A1**
(43) Date of publication of application: **27.11.1996**
(21) Application number: 95936804.4
(22) Date of filing: 19.10.1995
(51) Int. Cl.: C10L 5/14, C10L 5/36, C10L 11/06

(54) **FUEL BRIQUETTE AND A METHOD OF PRODUCING THE SAME**

(30) Priority: 07.12.1994 RU 94043321
(71) Applicant: Lury, Valery Grigorievich, Moscow, 125315 (RU)
(72) Inventor: LURY, Valery Grigorievich, Moscow, 125315 (RU); TERENTIEV, Yury Ivanovich, Moscow, 117312 (RU)
(74) Representative: Patentanwälte Zellentin & Partner
(86) International application number: RU9500227
(87) International publication number: WO9617906

(57) **Abstract**

Essence of the invention: A fuel briquette comprises a mixture of a ground solid fuel and a solution of a water-soluble organic binder having a humidity of more than 9 % and being comprised in a closed infalmmable envelope, the volume of the hardened mixture being equal to the inner volume of the envelope. As binder a sulfonic acid derivative in the form of 30 to 40 % aqueous solution of the sodium salt of methylenenaphthalene sulfonic acid or lignosulfonate is used.

When preparing the fuel briquettes the fuel is mixed with the binder solution, the mixture so obtained is batched and packed into a closed inflammable envelope. Hardening of the briquettes takes place simultaneously with storage, transportation or heating, including heating effected with simultaneous combustion thereof in the furnace or coking in a coke furnace battery.

## Description

The present invention relates to the technology of preparing fuel briquettes using fine-grained combustible substances, such as fine coal, coal sludge, saw-dust, husk, chopped bark and the like. Depending on the composition of combustible ingredients fuel briquettes can be utilized as high-grade fuel for combustion in domestic and industrial funaces designed for layer combustion on a grate, or as high-grade raw material for the production of coke in the coal-tar chemical and metallurgical industry.

Known is a fuel briquette comprising a moulded mixture of ground solid fuel (coal), no more than 5 % by weight of an alkylcellulose as water-soluble binder and further additives (lime, paper fibres, oil phytillate) which mixture having a humidity of no more than 16 % is comprised in a closed inflammable envelope (US Patent 4478601, int. cl. C 10 L 5/36, 1984).

The process for preparing fuel briquettes according to the prior art comprises the steps of mixing said ground solid fuel with said water-soluble binder and additives, batching and moulding the mixture so obtained as well as packing the moulded mixture having a humidity of no more than 16 % into a closed inflammable envelope.

The disadvantage of the known fuel briquette consists in that it has openings resulting in a reduction of its strength and an increase in the specific volume of storage of said briquettes.

The disadvantage of the known process for preparing coal briquettes consists in that as binder an expensive composite binding agent from water-soluble and water-insoluble materials is used. Such binders cause increased expenses for batching and agitation. According to said process after batching, moulding and imparting a stable configuration to the material a combustible layer (envelope) considerably increasing the production expenses is applied on the material. Furthermore combustion of such briquettes results in an increase in quantity of noxious emissions.

Closest to the invention is a fuel briquette comprising a mixture of ground solid fuel (sawdust or charcoal), a solution of 30-40 parts by weight of an organic binder (starch, hydroxy- or carboxymethyl cellulose) and further additives (alcohol, ethylene glycol, surfactants, hydrocarbon fuel) which mixture having a humidity of more than 9 % is contained in a closed inflammable envelope (US Patent 4043765, int. cl. C 10 L 5/36, 1977).

The process for preparing said fuel briquette comprises the steps of mixing a ground solid fuel with said binder and additives, batching the mixture so obtained and packing said mixture having a humidity of more than 9 % into a closed inflammable envelope.

The disadvantage of said prior art consists in that a combustible powder or solid particles are applied on the outer surface of said briquettes which powder or particles do not represent a coherent and flexible material. Such an outer layer easily disintegrates during loading and transport operations and can be a source of soiling storehouses.

Object of the present invention is to reduce capital expenses and power and labour consumption, improve ecological safety when producing and using fuel briquettes, reduce soiling of transport means, premises and attendants during transportation, loading and unloading operations and combustion of said briquettes. Besides, the invention ensures an increased thermomechanical strength of said briquettes, resulting in maintaining an optimum burning conditions during combustion. Thus, an increased degree of utilization of combustible substances is achieved.

Said object is achieved by the proposed fuel briquette for layer combustion which briquette comprises a mixture of ground solid fuel and a solution of a sulfonic acid derivative as binder, e.g. a solution of the sodium salt of methylenenaphthalene sulfonic acid or lignosulfate, which mixture has as humidity of more than 9 %, and is comprised in a closed inflammable envelope, the volume of the hardened mixture being equal to the inner volume of the envelope. Such briquettes are called OKSOL.

The process for OKSOL fuel briquettes according to the present invention comprises the steps of mixing a ground solid fuel with a solution of a water-soluble organic binder, batching and packing the mixture having a humidity of more than 9 % into a closed inflammable envelope, the volume of the mixture to be fed into the envelope being equal to the inner volume of the envelope, whereby as binder a sulfonic acid derivative, e.g. the sodium salt of methylenenaphthalene sulfonic acid or lignosulfonate in the form of a 30 to 40 % aqueous solution is used. After packing hardening of the briquettes is effected which step is carried out simultaneously with storage, transportation or heating, including heating being carried out simultaneously with combustion in the furnace or during coking in a coke furnace battery.

The briquette envelope protects transport means, premises and attendants from soiling with combustible substances. Furthermore, said envelope keeps the shape of a briquette not having been previously hardened, prior to be fed to the furnace, as well as in the furnace for the time until the envelope burns up.

If the briquette was preheated before use at a temperature of from 20 to 200°C for 20 to 0.25 h or was in a dry place more than 24 h, and the envelope was a permeable material, e.g. paper, then within that period of time the contents of the briquette become strong enough to retain shape due to the natural evaporation of moisture and the polymerization of the binder. If the briquette was in moist conditions before use and its envelope is made of an impermeable material, e.g. ethylene, then in case of a humidity of more than 9 % and the presence of a water-soluble binding agent in the mixture under the action of heat in the furnace during combustion the mixture becomes strong enough in order to keep the shape of the briquette during burning.

According to the present invention batching of a mixture of combustible substances and a water-soluble binder and packing are carried out simultaneously prior to drying and hardening the briquettes.

The production of fuel briquettes according to the present invention is illustrated by the following examples.

### EXAMPLE 1

The production of fuel briquettes was effected in a pilot plant. As combustible substances were used 30 kg of a coal sludge of the rank KSOST GOF "Sudyenskaya" having a sieve analysis of 0 to 3 mm and a humidity of 15.6 %. As binding agent was used a 30 % aqueous solution of the sodium salt of methylenenaphthalene sulfonic acid whose dry mass was 0.3 kg (1 % by mass). The sludge and the binder ware mixed in a BSF-150M "Tornado" mixer, the solution of the binder being fed by a Nsh-42 pump through an injector in the form of a spray onto the surface of the sludge while mixing. After having been mixed the mixture with a humidity of more than 9 % was charged into the hopper of the packing machine M1-OFK which simultaneously batched and packed the mixture without any compaction into a polypropylene film that was fed into the machine in the form of a hose having a diameter of 36 mm. At the end portions the packing so prepared was closed automatically with special clips. The briquettes thus manufactured were charged into a heated domestic furnace with layer combustion on a fire grate.

Laboratory investigations showed that the calorific value of the briquettes was 99 % of the calorific value of the starting combustible substances, i.e. 6300 to 6500 kcal/kg with respect to the given humidity and ash content of the starting sludge. Upon charring of the packing envelope the briquettes in the furnace did not lose shape until complete combustion. The briquettes drawn off from the furnace upon charring of the envelope were solid.

Hardening and shape stability of the briquettes have been tested by charging them in the form of some layers, up to seven layers, into a warmed-up domestic furnace. As a result of heating the briquettes were dried and hardened. During this test all of the layers kept their shape up to complete combustion.

The stability of the briquettes to loading and transport operations was tested as follows.
After having been packed in tens the briquettes were thrown from a height of three meters. During this test not a single packed briquette has been disintegrated.

### EXAMPLE 2

Fuel briquettes were produced in a pilot plant. 30 kg of coal of the rank KCOCT GOF "Sudyenskaya" were used as combustible substances. Said coal sludge has a sieve analysis of 0 to 3 mm and a humidity of 15.6%. As binder a 40 % solution of lignosulfonate was used.

Sludge and binder were agitated in a BSP-150M "Tornado" mixer the binder solution being supplied by a Nsh-42 pump through an injector in the form of a spray onto the surface of the sludge during agitation. Upon agitation, the mixture having a humidity of more than 9 % was charged into the hopper of a machine for packing in cartridges (a known machine for packing explosives in cartridges is described in the USSR Author's Certificate No. 119064, cl. 72 d 12-01, 1958). In the present case a paper band with an applied adhesive strip was transformed into a paper tube having a diameter of 32 mm by close winding on a special headpiece. Said paper tube being densely filled with a mixture of sludge and binder at a compacting pressure of 0.5 kg/cm² by means of a metering screw conveyer. Upon reaching a length of the filled paper tube amounting to 260 mm the tube was cut by means of a specific knife, i.e. filling (packing) and batching the mixture were carried out simultaneously.

The ends of the mixture-filled paper tube were released from the mixture for a certain length by means of specific milling cutters and the end portions of the tube were stopped by the paper thereby closing up the briquette envelope. The briquettes so prepared were thrown down in tens from a height of two meters whereby not a single briquette disintegrates. This result proves their stability to loading and transport operations. Nonhardening briquettes were placed in a warmed up domestic furnace with layer combustion on a fire grate wherein the coal/binder mixture hardened during heating and burning of the envelope, while said briquettes kept their shape up to complete combustion.

This result was established both in a single-layer and a multi-layer placement of briquettes in the furnace. Laboratory investigations showed that the calorific value of briquettes was 99 % of the calorific value of the starting combustible substances, i.e. 6300 to 6400 large calories per kg with respect to the given humidity and ash content of the starting sludge. Furthermore upon manufacture the briquettes with a paper envelope were piled on a rack in a dry chamber at room temperature. After 24 hours the sludge/binder mixture inside the paper envelope of a briquette was hardened. The hardened briquettes kept their shape both in the single-layer and multi-layer placement in the furnace up to complete combustion. On burning the briquettes did not release soot and the ash of the burnt briquettes did not comprise any combustible substances.

This result proves a complete combustion of the inflammable portion of said briquettes. At testing the mixture did not pour out of the briquettes and the clothes and the exposed parts of tester's bodies did not get soiled.

### EXAMPLE 3

Fuel briquettes were produced in a pilot plant. 15 kg of coal sludge of the rank KSOSTS GOF "Sudyenskaya" having a sieve analysis of 0 to 3 mm and a humidity of 15.6 % and 15 kg of peat were used as combustible substances. The binder was a 40 % aqueous solution of lignosulfonate.

Sludge, peat and binder were agitated in a BSP-150M "Tornado" mixer, the binder solution being supplied by a Nsh-42 pump via an injector in the form of a spray onto the surface of the sludge and peat during agitation. Upon agitation, the mixture having a humidity of more than 9 % was charged into the hopper of a APK machine for packing in cartridges. In this machine a paper band with an applied adhesive strip was transformed into a paper tube having a diameter of 36 mm by close winding on a special headpiece. While compacting said paper tube was densely filled with the mixture of sludge, peat and binder by means of a metering screw conveyer. Upon reaching a length of the filled paper tube amounting to 260 mm the tube was cut off by a specific knife, i.e. filling (packing) and batching of the mixture were carried out simultaneously. The ends of the mixture-filled paper tube were released from the mixture for a certain length by means of special milling cutters and the end portions of the tube were stopped by the paper thereby closing up the briquette envelope. The briquettes so prepared were thrown in tens from a height of two meters, whereby not a single briquette disintegrates. This result proves their stability to loading and transport operations. The nonhardened briquettes were placed in a warmed-up domestic furnace with layer combustion on a fire grate wherein the coal/binder mixture hardened during heating and burning of the envelope, while said briquettes kept their shape up to complete combustion.

This result was established both in a single-layer and a multi-layer placement of briquettes in the furnace. Laboratory investigations showed that the calorific value of briquettes was 99 % of the calorific value of the starting combustible substances, i.e. 3900 to 4000 large calories per kg with respect to the given humidity and ash content of the starting sludge. Furthermore upon manufacture the briquettes with a paper envelope were piled on a rack in a dry chamber at room temperature. After 24 hours the mixture of sludge, peat and binder inside the paper envelope of a briquette was hardened. The hardened briquettes kept their shape both in the single-layer and multi-layer placement in the furnace up to complete combustion. On burning the briquettes did not release soot and the ash of the burnt briquettes did not comprise any combustible substances.

This result proves a complete combustion of the inflammable portion of said briquettes. At testing the mixture did not pour out of the briquettes and the clothes and the exposed parts of tester's bodies did not get soiled.

Thus the examples and tests comfirm the possibility of preparing fuel briquettes in accordance with the process of the invention.

The tests prove that the fuel briquette according to the invention having a closed inflammable envelope does not cause soiling of premises and attendants with the mixture and is stable to loading and transport operations. The briquette keeps its shape on combustion in a furnace, and this fact allows one to maintain optimum combustion conditions and increase in the degree of utilization of combustible substances. Furthermore the tests show that the claimed process for preparing fuel briquettes reduces capital expenses and energy and labour consumption and also increases ecological safety when producing and utilizing the briquettes.

## Claims

1. A fuel briquette for furnace with layer combustion, comprising a mixture of ground solid fuel and a solution of a water-soluble organic binder, the mixture having a humidity of more than 9 % by mass and being comprised in a closed inflammable envelope, **characterized in** that the volume of the hardened mixture is equal to the inner volume of the envelope and as binder it comprises a sulfonic acid derivative.

2. A fuel briquette according to claim 1, **characterized in** that the sulfonic acid derivative is the sodium salt of methylenenaphthalene sulfonic acid or lignosulfonate.

3. A fuel briquette according to claim 2, **characterized in** that it comprises 1 % by mass of said methylenenaphthalene sulfonic acid sodium salt.

4. Process for preparing fuel briquettes for furnaces with layer combustion which process comprises the steps of mixing a ground solid fuel with a solution of a water-soluble organic binder, batching and packing the mixture having a humidity of more than 9 % into a closed inflammable envelope, **characterized in** that the volume of the mixture to be fed into the envelope is equal to the inner volume of the envelope and as binder a sulfonic acid derivative in the form of a 30 to 40 % aqueous solution is used, whereby after packing the briquettes are hardened.

5. A process according to claim 4, **characterized in** that as sulfonic acid derivative the sodium salt of methylenenaphthalene sulfonic acid or lignosulfonate is used.

6. A process according to claim 5, **characterized in** that the briquettes are hardened simultaneously with storage, transportation or heating.

7. A process according to claim 6, **characterized in** that the briquettes are hardened on combustion in a furnace or a coke-furnace battery.

8. A process according to claim 4, **characterized in** that the mixture is moulded before packing.

9. A process according to claim 4, **characterized in** that batching of the mixture and packing are carried out simultaneously.
